# EUROPEAN PATENT SPECIFICATION

(11) **EP 4 769 220 B1**
(45) Date of publication and mention of the grant of the patent: **04.11.2026**
(21) Application number: 25156876.2
(22) Date of filing: 10.02.2025
(51) Int. Cl.: G06N 3/045, G06N 3/096, G06N 3/09, G06N 3/084, G06N 3/0475

(54) **ELECTRONIC APPARATUS AND METHOD FOR TRAINING AN IMAGE GENERATION MODEL**
ELEKTRONISCHE VORRICHTUNG UND VERFAHREN ZUM TRAINIEREN EINES BILDERZEUGUNGSMODELLS
APPAREIL ÉLECTRONIQUE ET PROCÉDÉ D'APPRENTISSAGE D'UN MODÈLE DE GÉNÉRATION D'IMAGE

(30) Priority: 27.12.2024 US 202419002779
(43) Date of publication of application: 01.07.2026
(73) Proprietor: Acer Incorporated, New Taipei City 221 (TW)
(72) Inventor: SHIH, Ming-Yu, 221 New Taipei City (TW); HUANG, Tai-Huei, 221 New Taipei City (TW); CHEN, Guan-Min, 221 New Taipei City (TW); LIU, Chih-Neng, 221 New Taipei City (TW); CHEN, Liang-Chi, 221 New Taipei City (TW); SHEN, Tzu-Chi, 221 New Taipei City (TW)
(74) Representative: Haseltine Lake Kempner LLP

(56) References cited:
- Y.-E- LIN ET AL: "ATMKD: adaptive temperature guided multi-teacher knowledge distillation", MULTIMEDIA SYSTEMS, vol. 30, no. 5, 292, 26 September 2024 (2024-09-26), XP093290742, DOI: 10.1007/s00530-024-01483-w
- H. ZHANG ET AL: "Adaptive multi-teacher knowledge distillation with meta-learning", ARXIV.ORG, CORNELL UNIVERSITY LIBRARY, 201 OLIN LIBRARY CORNELL UNIVERSITY ITHACA, NY 14853, 11 June 2023 (2023-06-11), XP091536325, DOI: 10.48550/arXiv.2306.06634
- H. ZHANG ET AL: "Confidence-aware multi-teacher knowledge distillation", ARXIV.ORG, CORNELL UNIVERSITY LIBRARY, 201 OLIN LIBRARY CORNELL UNIVERSITY ITHACA, NY 14853, 11 February 2022 (2022-02-11), XP091148103, DOI: 10.48550/arXiv.2201.00007
- S. DU ET AL: "Agree to disagree: adaptive ensemble knowledge distillation in gradient space", ADVANCES IN NEURAL INFORMATION PROCESSING SYSTEMS 33 (PROCEEDINGS OF THE 34TH INTERNATIONAL CONFERENCE ON NEURAL INFORMATION PROCESSING SYSTEMS, NEURIPS 2020), 6 December 2020 (2020-12-06), pages 12345 - 12355, XP093290735, ISBN: 978-1-7138-2954-6, Retrieved from the Internet <URL:https://proceedings.neurips.cc/paper_files/paper/2020/file/91c77393975889bd08f301c9e13a44b7-Paper.pdf> [retrieved on 20250627]
- Z. GUO ET AL: "SAKD: sparse attention knowledge distillation", IMAGE AND VISION COMPUTING, vol. 146, 105020, 16 April 2024 (2024-04-16), XP093290746, DOI: 10.1016/j.imavis.2024.105020
- S. CHENNUPATI ET AL: "Adaptive distillation: aggregating knowledge from multiple paths for efficient distillation", ARXIV.ORG, CORNELL UNIVERSITY LIBRARY, 201 OLIN LIBRARY CORNELL UNIVERSITY ITHACA, NY 14853, 19 October 2021 (2021-10-19), XP091079223, DOI: 10.48550/arXiv.2110.09674

## Description

### BACKGROUND

### Technical Field

The disclosure relates to an image processing technology, and particularly to an electronic apparatus and a method for training an image generation model.

### Related Art

Artificial Intelligence (AI) has seen widespread applications in the field of multimedia, with remarkable advancements, particularly in image generation technologies. Text-to-image generation models, as a significant breakthrough in computer vision in recent years, have gained widespread attention due to their powerful generative capabilities. By providing suitable prompts, these models can generate images that are highly aligned with the textual descriptions, exhibiting exceptional fidelity. The development of text-to-image models has gone through multiple phases, evolving from early methods based on Generative Adversarial Networks (GANs) to the current adoption of Diffusion Models. This evolution showcases continuous progress in generative technology. Compared to GANs, diffusion models have emerged as a research hotspot due to their iterative denoising approach and outstanding ability to produce high-resolution images. Within the framework of diffusion models, the generation process centers around progressively adding and removing noise, utilizing reverse inference to produce clear and semantically accurate images.

Despite the remarkable generative capabilities of diffusion models in the text-to-image domain, significant limitations remain in their application. Firstly, the computational cost is high. The denoising process requires multiple iterative steps, making the generation process more time-consuming compared to GANs or autoregressive models. Secondly, training diffusion models is highly resource-intensive, especially when dealing with high-resolution images or complex multimodal conditions, where optimization and hyperparameter tuning become significantly more challenging. In summary, while diffusion models have achieved remarkable heights in text-to-image generation, their challenges in efficiency, resource demands, and training complexity remain critical bottlenecks for the further development of this technology.

On 26 September 2024, Lin et al. (ATMKD: adaptive temperature guided multi-teacher knowledge distillation; Multimedia Systems, vol. 30(5), 292; doi:10.1007/s00530-024-01483-w) disclosed an adaptive temperature guided multi-teacher knowledge distillation (ATMKD) which uses adaptive temperature and diverse aggregation strategy to improve distillation performance, internally leveraging dynamic and learnable temperature to adaptively control the difficulty level of multi-teacher knowledge, externally using the diverse aggregation strategy to fuse rich knowledge from multiple teachers, and optimizing the teacher output at both internal and external levels to provide more comprehensive guidance for the student model and achieve better distillation performance.

In 2023, Zhang et al. (Adaptive multi-teacher knowledge distillation with meta-learning; arXiv:2306.06634v1; doi:10.48550/arXiv.2306.06634) disclosed an adaptive multiteacher knowledge distillation with meta-learning (MMKD) to supervise student with appropriate knowledge from a tailored ensemble teacher, by jointly leveraging using a meta-weight network the diverse yet compatible teacher knowledge in the output layer and intermediate layers to enhance the student performance.

In 2022, Zhang et al. (Confidence-aware multi-teacher knowledge distillation; arXiv:2201.00007v2; doi:10.48550/arXiv.2201.00007) disclosed a confidence-aware multiteacher knowledge distillation (CA-MKD) which adaptively assigns sample-wise reliability for each teacher prediction with the help of ground-truth labels, with those teacher predictions close to one-hot labels assigned large weights, and incorporates features in intermediate layers to stabilise the knowledge transfer process.

In 2020, Du et al. (Agree to disagree: adaptive ensemble knowledge distillation in gradient space; Proceedings of NeurIPS 2020, pp. 12345-12355; ISBN: 978-1-7138-2954-6) examined the diversity of teacher models in the gradient space and regards the ensemble knowledge distillation as a multi-objective optimization problem in order to determine a better optimization direction for the training of student network, also introducing a tolerance parameter to accommodate disagreement among teachers similar to a dynamic weighting method for each teacher in the ensemble.

On 16 April 2024, Guo et al. (SAKD: sparse attention knowledge distillation; Image and Vision Computing, vol. 146, 105020; doi:10.1016/j.imavis.2024.105020) disclosed a knowledge distillation with sparse attention mechanism (SAKD), which computes attention using student features as queries and teacher features as key values and performs sparse attention values by random deactivation, then using this sparse attention value to reweight the feature distance of each teacher-student feature pair to avoid negative transfer.

In 2021, Chennupati et al. (Adaptive distillation: aggregating knowledge from multiple paths for efficient distillation; arXiv:2110.09674v1; doi:10.48550/arXiv.2110.09674) disclosed different approaches for aggregating the different paths for knowledge distillation, and introduces an adaptive approach based on multitask learning methods.

### SUMMARY

The invention is defined in the independent claims.

Preferred embodiments are defined in the dependent claims.

Based on the above, in the embodiment of the disclosure, an effective method for training a diffusion model using multi-teacher and multi-stage feature knowledge distillation is provided. The training image is input into two teacher models and a student model to obtain corresponding layer outputs. By calculating losses between the teacher models' outputs and the student model's outputs, the student model refines its parameters to align with the knowledge of the teacher models. This approach allows the student model to learn from diverse and complementary representations provided by the teachers, enabling the student model to integrate high-level and low-level information. The resulting model is lightweight, with fewer parameters, yet capable of generating high-resolution images efficiently.

### BRIEF DESCRIPTION OF THE DRAWINGS

FIG. 1 is a schematic diagram of an electronic apparatus according to an embodiment of the disclosure.
FIG. 2 is a flowchart of a method for training an image generation model according to an embodiment of the disclosure.
FIG. 3 is a schematic diagram of training an image generation model according to an embodiment of the disclosure.
FIG. 4 is a flowchart of a method for training an image generation model according to an embodiment of the disclosure.
FIG. 5 is a schematic diagram of training an image generation model according to an embodiment of the disclosure.
FIG. 6 is a schematic diagram of teacher models and a student model according to an embodiment of the disclosure.
FIG. 7 is a flowchart of a method for training an image generation model according to an embodiment of the disclosure.

### DESCRIPTION OF THE EMBODIMENTS

Some exemplary embodiments of the disclosure will now be described in detail with reference to the accompanying drawings. The reference numerals used in the following description, when appearing in different drawings with the same reference numerals, will be considered as the same or similar components. These exemplary embodiments are only a part of the disclosure and do not reveal all possible embodiments of the disclosure. More precisely, these exemplary embodiments are merely examples of the methods and apparatus in the claims of the disclosure.

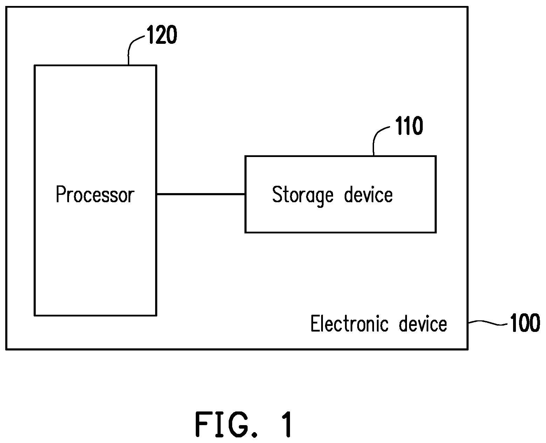

FIG. 1 is a schematic diagram of an electronic apparatus according to an embodiment of the disclosure. Referring to FIG. 1, the electronic apparatus 100 may be implemented as, for example, the following electronic apparatus with image processing and computing capabilities: a server, a laptop computer, a personal computer, a desktop computer, or other electronic apparatus. The electronic apparatus 100 includes a storage device 110, and at least one processor 120.

The storage device 110 is configured to temporarily or permanently store data, such as images, instructions, codes, software modules, and other data. Specifically, the storage device 110 may include volatile storage circuits. Volatile storage circuits are used to store data in a volatile manner. For example, volatile storage circuits may include random access memory (RAM) or similar volatile storage media. Alternatively, the storage device 110 may include non-volatile storage circuits. Non-volatile storage circuits are used to store data in a non-volatile manner. For example, non-volatile storage circuits may include read-only memory (ROM), solid-state drive (SSD), and/or traditional hard disk drive (HDD) or similar non-volatile storage media. The number of storage devices 110 may be one or more, and the disclosure does not impose any limitation in this regard.

The processor 120 is connected to the transceiver 110, the stereoscopic display 120, and the storage device 110, and is responsible for all or part of the operations of the electronic apparatus 100. For example, the processor 120 may include a central processing unit (CPU), a graphic processing unit (GPU), video processing unit (VPU), neural network processing unit (NPU), tensor processing unit (TPU), or other programmable general-purpose or special-purpose microprocessors, digital signal processor (DSP), programmable controllers, application-specific integrated circuit (ASIC), programmable logic device (PLD), or other similar devices or combinations of these devices. The number of processors 120 may be one or more, and the disclosure does not impose any limitation in this regard.

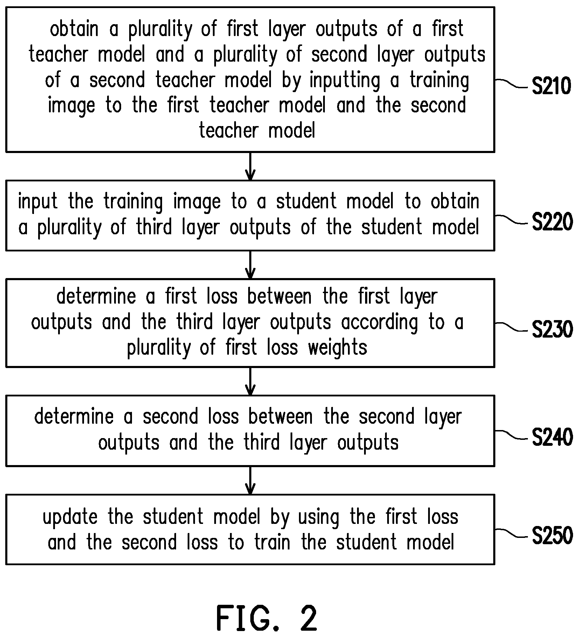

FIG. 2 is a flowchart of a method for training an image generation model according to an embodiment of the disclosure. Referring to FIG. 2, the operation process of the embodiment is applicable to the electronic apparatus 100 in the above-mentioned embodiment. The following will explain the detailed steps of the embodiment in conjunction with the various components in the electronic apparatus 100.

In step S210, the processor 120 may obtain a plurality of first layer outputs of a first teacher model and a plurality of second layer outputs of a second teacher model by inputting a training image to the first teacher model and the second teacher model. In detail, the training image may be inputted into the first teacher model and the second teacher model. In some embodiments, the first teacher model and the second teacher model are diffusion models using U-Net architectures. The processor 120 may extract intermediate outputs and/or model output from specific layers of both teacher models as the training image propagates through their U-Net architectures.

In some embodiments, the training image may be generated by performing noise injection on an original image from a training dataset. Specifically, the noise injection involves adding controlled levels of noise to the original image, transforming the original image into a noisy training image suitable for diffusion-based training. In some embodiments, this process of generating the noisy training image simulates the forward diffusion process, where noise is progressively added to an image in multiple time steps.

In some embodiments, a first model capability of the first teacher model is different from a second model capability of the second teacher model. In some embodiments, the first model capability includes a first model parameter amount, a first inference step number or the combination thereof, and the second model capability comprises a second model parameter amount, a second inference step number or the combination thereof. That is, the student may be trained by using two teacher models with different model capabilities.

In some embodiments, the first model parameter amount is less than the second model parameter amount, and the first inference step number is greater than the second inference step number. For example, the first teacher model may be a Segmind-Vega Model and the second teacher model may be a Stable Diffusion XL (SDXL) model, but the disclosure is not limited thereto.

In some embodiments, the first layer outputs of the first teacher model include a first feature outputted by a layer of the first teacher model and a first model output of the first teacher model, and the third layer outputs of the student model include a feature outputted by a layer of the student model and a model output of the student model. In some embodiments, the second layer outputs of the second teacher model include a second feature outputted by a layer of the second teacher model and a second model output of the second teacher model.

For the first teacher model, the first layer outputs include features extracted at different stages of its U-Net architecture, and the first layer outputs include a first model output, which is the final denoised image produced by the first teacher model after processing the input training image. For the second teacher model, the second layer outputs include features extracted at different stages of its U-Net architecture, and the second layer outputs include a second model output, which is the final denoised image produced by the second teacher model after processing the input training image.

In step S220, the processor 120 inputs the training image to a student model to obtain a plurality of third layer outputs of the student model. Specifically, the first teacher model, the second teacher model and the student modes are components of a knowledge distillation framework, where the teacher models guide the training of a smaller or simpler student model. The first teacher model and the second teacher model serve as pre-trained, high-capacity models that provide supervisory signals to the student model during training. The student model is a smaller, less complex model that is trained to replicate the performance of the teacher models while being computationally efficient.

In step S230, the processor 120 determines a first loss between the first layer outputs and the third layer outputs according to a plurality of first loss weights. Specifically, the first loss is computed by comparing the first layer outputs of the first teacher model and the third layer outputs of the student model. The comparison is performed at corresponding layers to evaluate the alignment of intermediate features and the final output between the first teacher and the student model. Further, the first loss weights are applied to balance the contributions of losses from different layers, giving more or less importance to certain stages of the network.

In some embodiments, the processor 120 determines a feature-level loss between the first feature of the first teacher model and the feature of the student model according to one of the first loss weights. The feature-level loss is computed to measure the alignment of intermediate representations, focusing on the similarity of feature maps extracted at a specific layer of both the teacher model and the student model. The feature-level loss is critical for ensuring the student model mimics the feature extraction patterns of the first teacher model. The processor 120 compares the first feature (an intermediate output from a specific layer in the first teacher model) with the corresponding feature of the student model, and the feature-level loss may be calculated using similarity measures, such as Mean Squared Error (MSE) or Cosine Similarity. Next, the feature-level loss is scaled by a first loss weight, which reflects the importance of the feature alignment at this layer relative to other layers..

In some embodiments, the processor 120 determines an output-level loss according to the first model output of the first teacher model and the model output of the student model according to another one of the first loss weights. The output-level loss is computed to measure the alignment between the first model output of the first teacher model and the model output of the student model, ensuring that the student model replicates the overall performance of the teacher model. The output-level loss is calculated by comparing the denoised or generated image from the first teacher model with the corresponding output from the student model using metrics such as mean squared error (MSE), mean absolute error (MAE), or perceptual loss. Next, the output-level loss is scaled by the other first loss weight to reflect its importance relative to other loss components in the training process.

In some embodiments, the processor 120 determines the first loss by summing the feature-level loss and the output-level loss. By combining the output-level loss with the feature-level losses, the processor 120 may construct a comprehensive total loss that guides the student model toward efficient and accurate performance while maintaining computational efficiency. By summing the feature-level loss and the output-level loss, the processor 120 constructs a total first loss that guides the student model toward achieving the performance of the first teacher model with significantly reduced computational complexity.

In step S240, the processor 120 determines a second loss between the second layer outputs and the third layer outputs. Specifically, the second loss is computed by comparing the second layer outputs of the second teacher model and the third layer outputs of the student model. The comparison is performed at corresponding layers to evaluate the alignment of intermediate features and the final output between the second teacher and the student model.

In some embodiments, the second loss includes contributions from both intermediate feature-level comparisons and the final output alignment. By aligning the second teacher model's features with the student model's outputs, the processor 120 may ensure that the student model benefits from diverse training signals derived from the second teacher model's unique strengths or specialization. In some embodiments, the second loss may also include weighted contributions from different layers of the second teacher model, similar to the approach used in the first loss related to the first teacher model.

In step S250, the processor 120 updates the student model by using the first loss and the second loss to train the student model. In detail, the second loss is combined with the first loss to form the total loss function for training the student model. The total loss, which is a sum of the first loss and the second loss, ensures that the student model effectively captures both the detailed feature representations and the high-level outputs of both teacher models. The processor 120 may use the total loss to perform backpropagation, updating the parameters of the student model through gradient-based optimization methods such as stochastic gradient descent (SGD) or Adam. By iteratively minimizing the total loss, the student model gradually learns to replicate the feature extraction, processing, and output generation capabilities of both teacher models. By leveraging the complementary guidance from the first and second teacher models, the student model achieves a balance between computational efficiency and task performance, while generalizing effectively to diverse input scenarios.

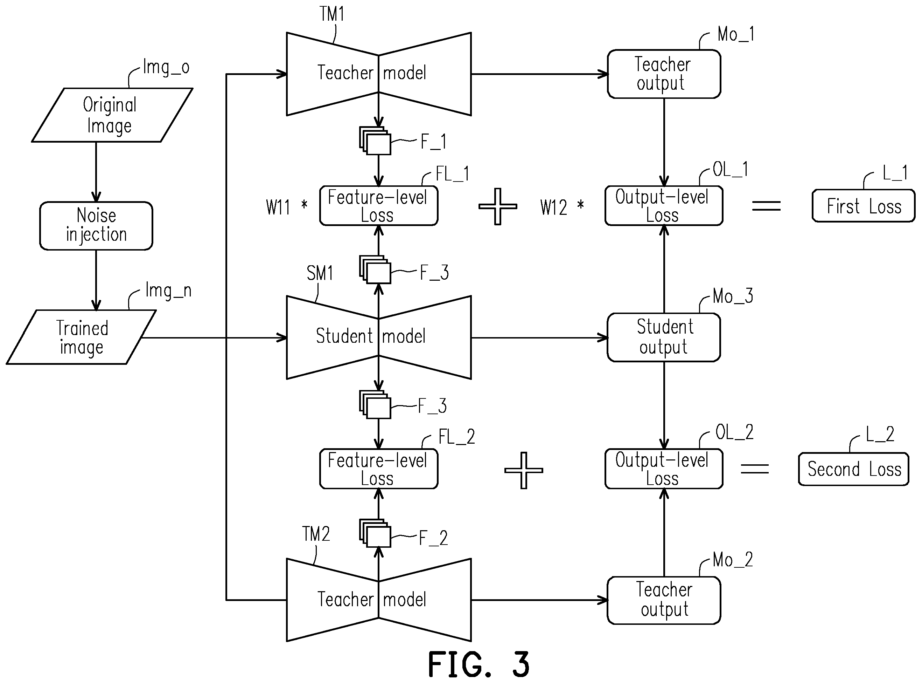

FIG. 3 is a schematic diagram of training an image generation model according to an embodiment of the disclosure. Referring to FIG.3, the processor 120 may perform a noise injection on the original image Img_o to generate a training image Img_n. The training image Img_n is input into a first teacher model TM1, a second teacher model TM2, and a student model SM1. A plurality of first layer outputs of the first teacher model TM1 include a first feature F_1 outputted by a layer of the first teacher model TM1 and a first model output Mo_1 of the first teacher model TM1. It should be noted that the amount of the first feature for calculating the feature-level loss is not limited in the disclosure. A plurality of second layer outputs of the second teacher model TM2 include a second feature F_2 outputted by a layer of the second teacher model TM2 and a second model output Mo_2 of the second teacher model TM2. It should be noted that the amount of the second feature for calculating the feature-level loss is not limited in the disclosure. A plurality of third layer outputs of the student model SM1 include a feature F_3 outputted by a layer of the student model SM1 and a model output Mo_3 of the student model SM1.

In FIG.3, the first loss weights comprise a first output loss weight W12 and at least one first feature loss weight W11. A feature-level loss FL_1 is calculated by comparing the first feature F_1 of the first teacher model TM1 and the feature F_3 of the student model SM1, and the feature-level loss FL_1 is scaled according to a first feature loss weight W11. Further, an output-level loss OL_1 is calculated by comparing the first model output Mo_1 of the first teacher model TM1 and the model output Mo_3 of the student model SM1, and the output-level loss OL_1 is scaled according to a first output loss weight W12. The first loss L_1 may be a sum of the scaled output-level loss OL_1 and the scaled feature-level loss FL_1.

In FIG.3, a feature-level loss FL_2 is calculated by comparing the second feature F_2 of the second teacher model TM2 and the feature F_3 of the student model SM1. Further, an output-level loss OL_2 is calculated by comparing the second model output Mo_2 of the second teacher model TM2 and the model output Mo_3 of the student model SM1. The second loss L_2 may be a sum of the output-level loss OL_2 and the feature-level loss FL_2. The student then may be updated according to the sum of the first loss L_1 and the second loss L_2.

By training the student model using the two different teacher models with different model capability, the student model may benefit from complementary guidance that combines the strengths of both teacher models. This dual-teacher approach allows the student model to learn a diverse set of features, improving its overall performance and generalization ability. The training methodology in the embodiments not only reduces the complexity of the student model but also enhances its robustness across different input scenarios. As a result, the student model achieves performance levels close to or matching those of the teacher models while operating with significantly reduced resource requirements, making it ideal for deployment in practical applications.

Further, in some embodiments, during the training process of the student model, the text feature vector of the text corresponding to the training image is also input into both the teacher models and the student model. The addition of the text feature vector of the text enables the models to leverage text-image alignment as part of the training process, ensuring that the student model learns to incorporate textual context effectively. The text feature vector, derived from a pre-trained text encoder, provides semantic information that enhances the understanding of the training image. Incorporating the text feature vector into the student model's training ensures consistency with the teacher models, enabling the student model to handle multi-modal input effectively.

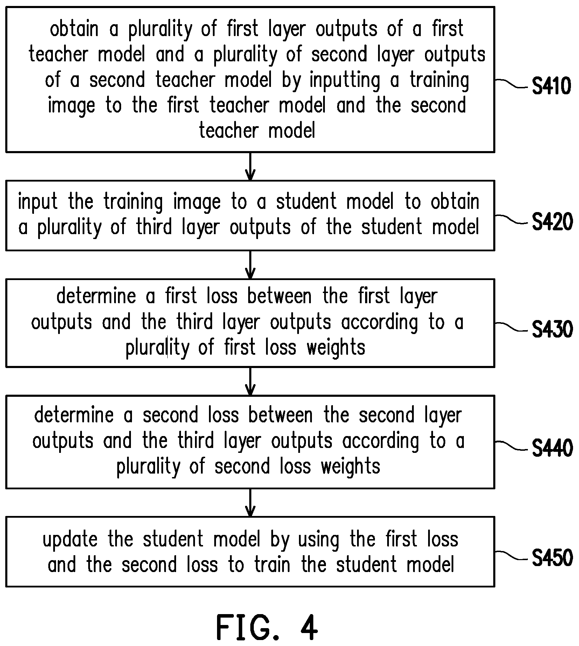

FIG. 4 is a flowchart of a method for training an image generation model according to an embodiment of the disclosure. Referring to FIG. 4, the operation process of the embodiment is applicable to the electronic apparatus 100 in the above-mentioned embodiment. The following will explain the detailed steps of the embodiment in conjunction with the various components in the electronic apparatus 100.

In step S410, the processor 120 obtains a plurality of first layer outputs of a first teacher model and a plurality of second layer outputs of a second teacher model by inputting a training image to the first teacher model and the second teacher model. In step S420, the processor 120 inputs the training image to a student model to obtain a plurality of third layer outputs of the student model. In step S430, the processor 120 determines a first loss between the first layer outputs and the third layer outputs according to a plurality of first loss weights. The description and implementation of steps S410 to S430 may refer to the foregoing embodiments, and will not be described again here.

In step S440, the processor 120 may determine a second loss between the second layer outputs and the third layer outputs according to a plurality of second loss weights. It should be noted that, in some embodiments, the feature-level loss related to the second teacher model and the output-level loss related to the second teacher model may be scaled using the second loss weights. The second loss weights may allow the processor 120 to control the influence of different layers and output contributions from the second teacher model during the training of the student model.

In some embodiments, the second loss is computed as a combination of the feature-level loss and the output-level loss, with each component scaled by its corresponding second loss weight. The feature-level loss measures the similarity of intermediate representations between the second teacher model and the student model, ensuring that the student model learns to replicate the processing strategies of the second teacher model at various stages of its architecture. The output-level loss, on the other hand, evaluates the alignment of the final outputs between the second teacher and the student models, emphasizing overall task performance.

In step S450, the processor 120 updates the student model by using the first loss and the second loss to train the student model. The description and implementation of step S450 may refer to the foregoing embodiments, and will not be described again here.

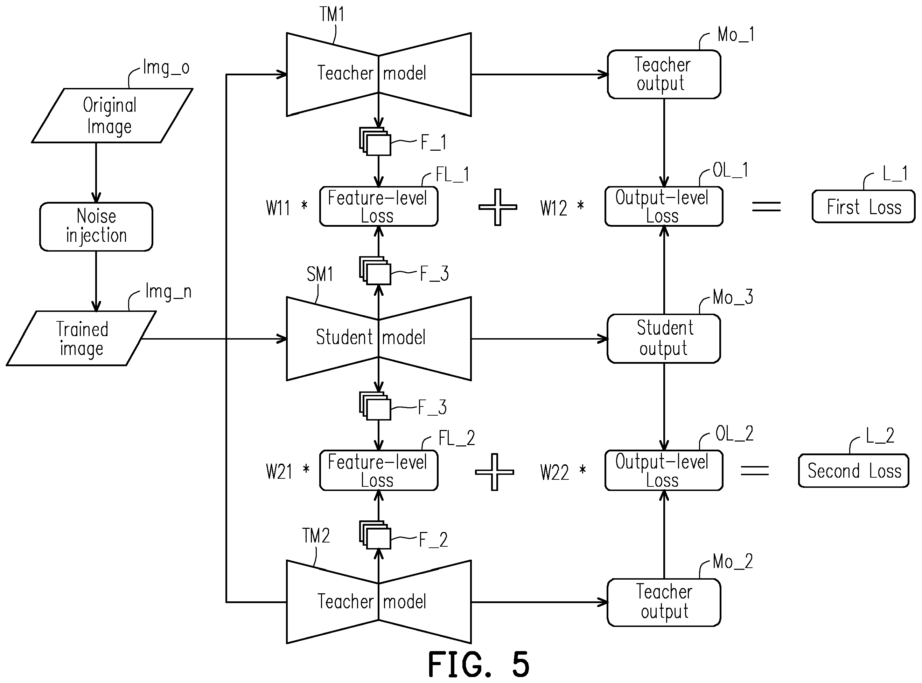

FIG. 5 is a schematic diagram of training an image generation model according to an embodiment of the disclosure. Referring to Fig. 5, the calculation approach of the first loss L_1 in FIG. 5 is same as the calculation approach of the first loss L_1 in FIG. 3, and will not be described again here. It should be noted that, in some embodiments, the second loss weights comprise a second output loss weight W22 and at least one second feature loss weight W21. In FIG. 5, a feature-level loss FL_2 is calculated by comparing the second feature F_2 of the second teacher model TM2 and the feature F_3 of the student model SM1, and the feature-level loss FL_2 is scaled by the second feature loss weight W21. Further, an output-level loss OL_2 is calculated by comparing the second model output Mo_2 of the second teacher model TM2 and the model output Mo_3 of the student model SM1, and the output-level loss OL_2 is scaled by the second output loss weight W22. The second loss L_2 may be a sum of the scaled output-level loss OL_2 and the scaled feature-level loss FL_2. The student then may be updated according to the sum of the first loss L_1 and the second loss L 2.

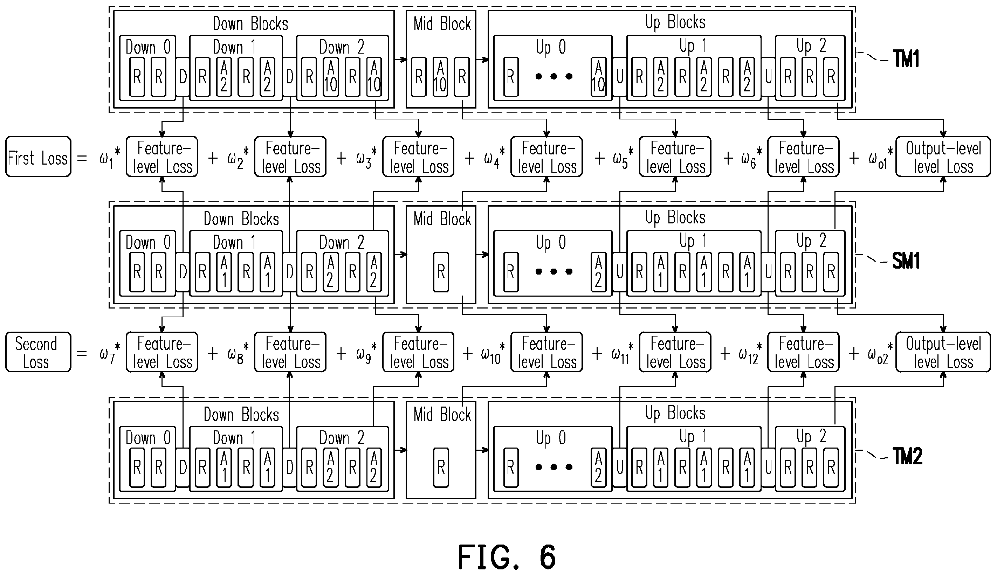

FIG. 6 is a schematic diagram of training an image generation model according to an embodiment of the disclosure. Referring to Fig. 6, in some embodiments, the first teacher model TM1 and the second teacher model TM2 and the student model respectively include multiple down blocks, a middle block and multiple up blocks. The down blocks include ResNet blocks (denoted as R), Attention block (denoted as A) and Downsampling Layers (denoted as D). The up blocks include ResNet blocks (denoted as R), Attention block (denoted as A) and Upsampling Layers (denoted as U).

The processor 120 may calculate three feature-level losses by comparing the output of down blocks of the first teacher model TM1 and the output of down blocks of the student model SM1, and the three feature-level losses are scaled respectively based on the first loss weights w₁, w₂, w₃. The processor 120 may calculate one feature-level loss by comparing the output of the middle block of the first teacher model TM1 and the output of the middle block of the student model SM1, and the feature-level losses are scaled based on the first loss weight w₄. The processor 120 may calculate two feature-level losses by comparing the output of up blocks of the first teacher model TM1 and the output of up blocks of the student model SM1, and the feature-level losses are scaled respectively based on the first loss weights w₅, w₆. The processor 120 may calculate an output-level losses by comparing the output of the first teacher model TM1 and the output of the student model SM1, and the output-level loss is scaled respectively based on the first loss weights wₒ₁. The first loss is the sum of the scaled feature-level losses and the scaled output-level loss.

Besides, the processor 120 may calculate three feature-level losses by comparing the output of down blocks of the second teacher model TM2 and the output of down blocks of the student model SM1, and the three feature-level losses are scaled respectively based on the second loss weights w₇, w₈, w₉. The processor 120 may calculate one feature-level loss by comparing the output of the middle block of the second teacher model TM2 and the output of the middle block of the student model SM1, and the feature-level loss is scaled based on the second loss weight w₁₀. The processor 120 may calculate two feature-level losses by comparing the output of up blocks of the second teacher model TM2 and the output of up blocks of the student model SM1, and the feature-level losses are scaled respectively based on the second loss weights w₁₁, w₁₂. The processor 120 may calculate an output-level losses by comparing the output of the second teacher model TM2 and the output of the student model SM1, and the output-level loss is scaled respectively based on the second loss weights wₒ₂. The second loss is the sum of the scaled feature-level losses and the scaled output-level loss. The student model SM1 is updated according to the sum of the second loss and the first loss.

In some embodiments, the first loss weights and the second loss weights may be optimized to dynamically balance the contributions of feature-level losses and output-level losses during the training of the student model.

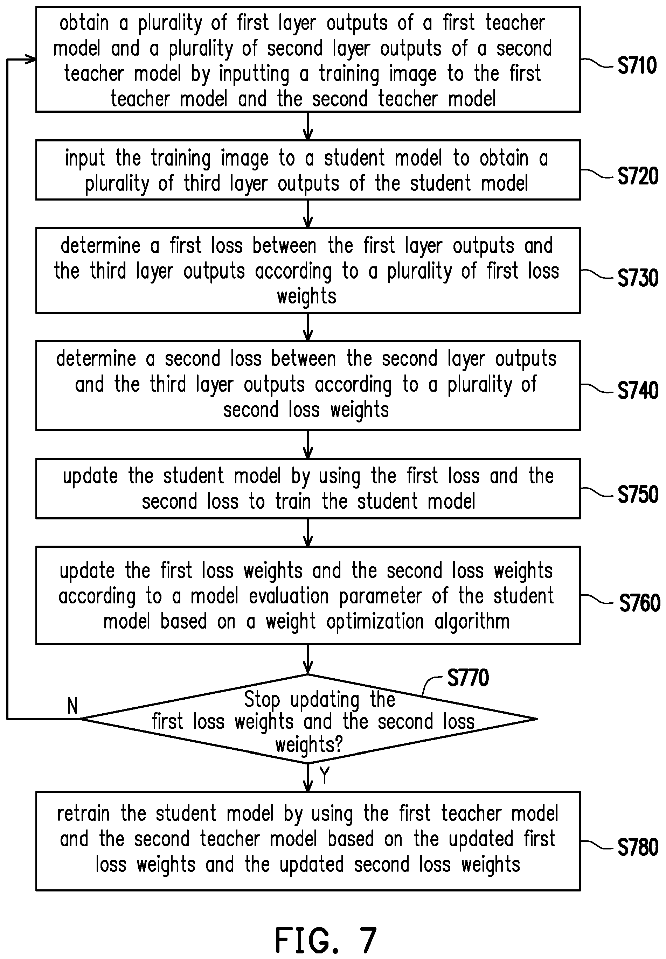

FIG. 7 is a flowchart of a method for training an image generation model according to an embodiment of the disclosure. Referring to FIG. 7, the operation process of the embodiment is applicable to the electronic apparatus 100 in the above-mentioned embodiment. The following will explain the detailed steps of the embodiment in conjunction with the various components in the electronic apparatus 100.

In step S710, the processor 120 obtains a plurality of first layer outputs of a first teacher model and a plurality of second layer outputs of a second teacher model by inputting a training image to the first teacher model and the second teacher model. In step S720, the processor 120 inputs the training image to a student model to obtain a plurality of third layer outputs of the student model. In step S730, the processor 120 determines a first loss between the first layer outputs and the third layer outputs according to a plurality of first loss weights. In step S740, the processor 120 determines a second loss between the second layer outputs and the third layer outputs according to a plurality of second loss weights. In step S750, the processor 120 updates the student model by using the first loss and the second loss to train the student model. The description and implementation of steps S710 to S750 may refer to the foregoing embodiments, and will not be described again here.

In step S760, the processor 120 may update the first loss weights and the second loss weights according to a model evaluation parameter of the student model based on a weight optimization algorithm. The first loss weights and the second loss weights may allow the processor 120 to dynamically balance the contributions of feature-level losses and output-level losses from different teacher models. In some embodiments, the first loss weights and the second loss weights are treated as tunable hyperparameters that influence the contributions of feature-level losses and output-level losses in the total loss function during the training of the student model. The loss weight tuning process is critical for achieving an optimal balance between computational efficiency and training effectiveness.

In some embodiments, the model evaluation parameter comprises a Fréchet Inception Distance (FID). The FID metric evaluates the quality of the outputs generated by the student model by comparing their statistical distribution with the ground truth data distribution. A lower FID value indicates that the outputs of the student model are closer to the ground truth, implying improved performance.

In some embodiments, the processor 120 may search the first output loss weight and the at least one first feature loss weight within a given search space according to the model evaluation parameter of the student model. This search is guided by the model evaluation parameter, such as the Fréchet Inception Distance, to identify the optimal weight configuration that minimizes the total loss function while improving the overall performance of the student model. The search space represents the range of possible values for the loss weights, allowing the processor to explore various configurations systematically.

In some embodiments, the weight optimization algorithm includes at least one of the following: Tree-Structured Parzen Estimation, Bayesian Optimization, Grid Search, Random Optimization, Sequential Model-Based Algorithm Configuration, and Metis.

In step S770, the processor 120 may determine whether to stop updating the first loss weights and the second loss weights. In some embodiments, the processor 120 may determine whether to stop updating the first loss weights and the second loss weights based on predefined stopping criteria. The predefined stopping criteria may include achieving a specific target value for the model evaluation parameter, such as a sufficiently low Fréchet Inception Distance, or reaching a maximum number of optimization iterations.

In various embodiments, the first loss weights and the second loss weights may be updated when the processor 120 completes an iteration, an epoch, or an entire training process. The choice of when to update the loss weights depends on the specific training strategy and the desired level of dynamic adjustment. For example, the first loss weights and the second loss weights may be updated after each iteration using a batch of training data. The first loss weights and the second loss weights may be updated after each epoch using an entire epoch of training data.

In step S780, in response to determining to stop updating the first loss weights and the second loss weights (i.e., step S770 determined as positive), the processor 120 may retrain the student model by using the first teacher model and the second teacher model based on the updated first loss weights and the updated second loss weights. The retraining process leverages the optimized loss weights to ensure that the contributions from feature-level and output-level losses are balanced effectively, reflecting the complementary strengths of the first teacher model and the second teacher model. Otherwise, in response to determining not to stop updating the first loss weights and the second loss weights (i.e., step S770 determined as negative), the processor 120 may repeat the step S710 to the step S770 again. That is, if the processor 120 determines that the stopping criteria have been met, the optimization process for the first loss weights and the second loss weights is finalized. The optimized loss weights are then used to guide the subsequent training of the student model. The optimized loss weights ensure that the total loss function reflects the optimal balance between feature-level and output-level contributions, resulting in an effective and efficient training process.

In summary, in the embodiments of the disclosure, the multi-teacher, multi-stage knowledge distillation combined with loss weight optimization provides significant benefits for training text-to-image models. This training framework enables the student model to effectively learn from multiple teacher models, each specializing in different aspects of the task, such as fine-grained details, global semantic coherence, or handling noise at various levels. By incorporating complementary knowledge from the teacher models, the student model achieves a more comprehensive understanding of both low-level and high-level features.

Through the use of optimized loss weights, the training process dynamically balances the contributions of feature-level and output-level losses across multiple teacher models, ensuring that the student model focuses on the most relevant aspects of the teacher models at each stage of training. The embodiments of the disclosure enable the training of a lightweight and efficient student model capable of generating high-quality outputs with strong semantic alignment to textual inputs, even when trained on limited data. The approach ensures that the student model achieves robust performance, making it a practical solution for real-world applications with restricted data availability and computational constraints.

## Claims

1. A computer-implemented method for training an image generation model, comprising:
obtaining (S210) a plurality of first layer outputs of a first teacher model (TM1) and a plurality of second layer outputs of a second teacher model (TM2) by inputting a training image to the first teacher model (TM1) and the second teacher model (TM2), wherein the first layer outputs comprise a first feature outputted by a layer of the first teacher model (TM1) and a first model output of the first teacher model (TM1), the first model output of the first teacher model (TM1) is a first final denoised image, the second layer outputs comprise a second model output of the second teacher model (TM2), and the second model output of the second teacher model (TM2) is a second final denoised image;
inputting (S220) the training image to a student model (SM1) to obtain a plurality of third layer outputs of the student model (SM1), wherein the student model (SM1) is the image generation model, and the third layer outputs comprise a feature outputted by a layer of the student model (SM1) and a model output of the student model (SM1);determining (S230) a first loss between the first layer outputs and the third layer outputs according to a plurality of first loss weights;
determining (S240) a second loss between the second layer outputs and the third layer outputs; and
updating (S250) the student model (SM1) by using the first loss and the second loss to train the student model (SM1),
wherein the step of determining the first loss between the first layer outputs and the third layer outputs according to the first loss weights comprises:
determining a feature-level loss between the first feature of the first teacher model (TM1) and the feature of the student model (SM1) according to one of the first loss weights;
determining an output-level loss according to the first model output of the first teacher model (TM1) and the model output of the student model (SM1) according to another one of the first loss weights; and
determining the first loss by summing the feature-level loss and the output-level loss.

2. The method according to claim 1, wherein the first teacher model (TM1) with a first model capability is different from the second teacher model (TM2) with a second model capability.

3. The method according to claim 2, wherein the first model capability comprises a first model parameter amount, a first inference step number of a combination thereof, and the second model capability comprises a second model parameter amount, a second inference step number or the combination thereof, wherein the first model parameter amount is different from the second model parameter amount, the first inference step number is different from the second inference step number, or the combination thereof.

4. The method according to any one of claim 1 to 3, wherein the step of determining the second loss between the second layer outputs and the third layer outputs comprises:
determining the second loss between the second layer outputs and the third layer outputs according to a plurality of second loss weights.

5. The method according to claim 4, wherein the second layer outputs comprise a second feature outputted by a layer of the second teacher model (TM2) and a second model output of the second teacher model (TM2), and the third layer outputs comprise a feature outputted by a layer of the student model (SM1) and a model output of the student model (SM1).

6. The method according to claim 4, further comprising:
updating the first loss weights and the second loss weights according to a model evaluation parameter of the student model (SM1) based on a weight optimization algorithm.

7. The method according to claim 6, wherein the first loss weights comprise a first output loss weight and at least one first feature loss weight, the second loss weights comprise a second output loss weight and at least one second feature loss weight, and the step of updating the first loss weights and the second loss weights according to the model evaluation parameter of the student model (SM1) based on the weight optimization algorithm comprises:
searching the first output loss weight, the at least one first feature loss weight, the second output loss weight, the at least one second feature loss weight within a given search space according to the model evaluation parameter of the student model (SM1).

8. The method according to claim 6, wherein the model evaluation parameter comprises a Fréchet Inception Distance.

9. An electronic apparatus (100), comprising:
a storage device (110);
a processor (120), coupled to the storage device (110) and configured to:
obtain a plurality of first layer outputs of a first teacher model (TM1) and a plurality of second layer outputs of a second teacher model (TM2) by inputting a training image to the first teacher model (TM1) and the second teacher model (TM2), wherein the first layer outputs comprise a first feature outputted by a layer of the first teacher model (TM1) and a first model output of the first teacher model (TM1), the first model output of the first teacher model (TM1) is a first final denoised image, the second layer outputs comprise a second model output of the second teacher model (TM2), and the second model output of the second teacher model (TM2) is a second final denoised image;
input the training image to a student model (SM1) to obtain a plurality of third layer outputs of the student model (SM1), wherein the student model (SM1) is an image generation model, and the third layer outputs comprise a feature outputted by a layer of the student model (SM1) and a model output of the student model (SM1);
determine a first loss between the first layer outputs and the third layer outputs according to a plurality of first loss weights;
determine a second loss between the second layer outputs and the third layer outputs; and
update the student model (SM1) by using the first loss and the second loss to train the student model (SM1),
wherein the processor (120) is further configured to:
determine a feature-level loss between the first feature of the first teacher model (TM1) and the feature of the student model (SM1) according to one of the first loss weights;
determine an output-level loss according to the first model output of the first teacher model (TM1) and the model output of the student model (SM1) according to another one of the first loss weights; and
determine the first loss by summing the feature-level loss and the output-level loss.

10. The electronic apparatus (100) according to claim 9, wherein the first teacher model (TM1) with a first model capability is different from the second teacher model (TM2) with a second model capability.

11. The electronic apparatus (100) according to claim 10, wherein the first model capability comprises a first model parameter amount, a first inference step number or the combination thereof, and the second model capability comprises a second model parameter amount, a second inference step number or a combination thereof,
wherein the first model parameter amount is different from the second model parameter amount, the first inference step number is different from the second inference step number, or the combination thereof.

12. The electronic apparatus (100) according to any one of claim 9 to 11, wherein the processor (120) is further configured to:
determine the second loss between the second layer outputs and the third layer outputs according to a plurality of second loss weights.

13. The electronic apparatus (100) according to claim 12, wherein the second layer outputs comprise a second feature outputted by a layer of the second teacher model (TM2) and a second model output of the second teacher model (TM2), and the third layer outputs comprise a feature outputted by a layer of the student model (SM1) and a model output of the student model (SM1).

14. The electronic apparatus (100) according to claim 12, wherein the processor (120) is further configured to:
update the first loss weights and the second loss weights according to a model evaluation parameter of the student model (SM1) based on a weight optimization algorithm.

15. The electronic apparatus (100) according to claim 14, wherein the first loss weights comprise a first output loss weight and at least one first feature loss weight, the second loss weights comprise a second output loss weight and at least one second feature loss weight, and the processor (120) is further configured to:
search the first output loss weight, the at least one first feature loss weight, the second output loss weight, the at least one second feature loss weight within a given search space according to the model evaluation parameter of the student model (SM1).

16. The electronic apparatus (100) according to claim 14, wherein the model evaluation parameter comprises a Fréchet Inception Distance.

## Patentansprüche

1. Computerimplementiertes Verfahren zum Trainieren eines Bilderzeugungsmodells, umfassend:
Erhalten (S210) einer Vielzahl von Ausgaben der ersten Schicht eines ersten Lehrermodells (TM1) und einer Vielzahl von Ausgaben der zweiten Schicht eines zweiten Lehrermodells (TM2) durch Eingeben eines Trainingsbildes in das erste Lehrermodell (TM1) und das zweite Lehrermodell (TM2), wobei die Ausgaben der ersten Schicht ein erstes Merkmal, das von einer Schicht des ersten Lehrermodells (TM1) ausgegeben wird, und eine erste Modellausgabe des ersten Lehrermodells (TM1) umfassen, wobei die erste Modellausgabe des ersten Lehrermodells (TM1) ein erstes endgültiges entrauschtes Bild ist, die Ausgaben der zweiten Schicht eine zweite Modellausgabe des zweiten Lehrermodells (TM2) umfassen und die zweite Modellausgabe des zweiten Lehrermodells (TM2) ein zweites endgültiges entrauschtes Bild ist;
Eingeben (S220) des Trainingsbildes in ein Schülermodell (SM1), um eine Vielzahl von Ausgaben der dritten Schicht des Schülermodells (SM1) zu erhalten, wobei das Schülermodell (SM1) das Bilderzeugungsmodell ist und die Ausgaben der dritten Schicht ein von einer Schicht des Schülermodells (SM1) ausgegebenes Merkmal und eine Modellausgabe des Schülermodells (SM1) umfassen; Bestimmen (S230) eines ersten Verlusts zwischen den Ausgaben der ersten Schicht und den Ausgaben der dritten Schicht gemäß einer Vielzahl von ersten Verlustgewichten;
Bestimmen (S240) eines zweiten Verlusts zwischen den Ausgaben der zweiten Schicht und den Ausgaben der dritten Schicht; und
Aktualisieren (S250) des Schülermodells (SM1) unter Verwendung des ersten Verlusts und des zweiten Verlusts, um das Schülermodell (SM1) zu trainieren,
wobei der Schritt des Bestimmens des ersten Verlusts zwischen den Ausgaben der ersten Schicht und den Ausgaben der dritten Schicht gemäß den ersten Verlustgewichten Folgendes umfasst:
Bestimmen eines Verlusts auf Merkmalsebene zwischen dem ersten Merkmal des ersten Lehrermodells (TM1) und dem Merkmal des Schülermodells (SM1) gemäß einem von den ersten Verlustgewichten;
Bestimmen eines Verlusts auf Ausgabeebene gemäß der ersten Modellausgabe des ersten Lehrermodells (TM1) und der Modellausgabe des Schülermodells (SM1) gemäß einem weiteren der ersten Verlustgewichte; und
Bestimmen des ersten Verlusts durch Addieren des Verlusts auf Merkmalsebene und des Verlusts auf Ausgabeebene.

2. Verfahren nach Anspruch 1, wobei sich das erste Lehrermodell (TM1) mit einer ersten Modellfähigkeit von dem zweiten Lehrermodell (TM2) mit einer zweiten Modellfähigkeit unterscheidet.

3. Verfahren nach Anspruch 2, wobei die erste Modellfähigkeit eine erste Modellparametermenge, eine erste Inferenzschrittnummer oder eine Kombination davon umfasst und die zweite Modellfähigkeit eine zweite Modellparametermenge, eine zweite Inferenzschrittnummer oder eine Kombination davon umfasst, wobei sich die erste Modellparametermenge von der zweiten Modellparametermenge unterscheiden und sich die erste Inferenzschrittnummer von der zweiten Inferenzschrittnummer unterscheidet, oder die Kombination davon.

4. Verfahren nach einem der Ansprüche 1 bis 3, wobei der Schritt des Bestimmens des zweiten Verlusts zwischen den Ausgaben der zweiten Schicht und den Ausgaben der dritten Schicht Folgendes umfasst:
Bestimmen des zweiten Verlusts zwischen den Ausgaben der zweiten Schicht und den Ausgaben der dritten Schicht gemäß einer Vielzahl von zweiten Verlustgewichten.

5. Verfahren nach Anspruch 4, wobei die Ausgaben der zweiten Schicht ein zweites Merkmal, das von einer Schicht des zweiten Lehrermodells (TM2) ausgegeben wird, und eine zweite Modellausgabe des zweiten Lehrermodells (TM2) umfassen, und die Ausgaben der dritten Schicht ein Merkmal, das von einer Schicht des Schülermodells (SM1) ausgegeben wird, und eine Modellausgabe des Schülermodells (SM1) umfassen.

6. Verfahren nach Anspruch 4, ferner umfassend:
Aktualisieren der ersten Verlustgewichte und zweiten Verlustgewichte gemäß einem Modellbeurteilungsparameter des Schülermodells (SM1) basierend auf einem Gewichtsoptimierungsalgorithmus.

7. Verfahren nach Anspruch 6, wobei die ersten Verlustgewichte ein erstes Ausgabeverlustgewicht und mindestens ein erstes Merkmalsverlustgewicht umfassen, die zweiten Verlustgewichte ein zweites Ausgabeverlustgewicht und mindestens ein zweites Merkmalsverlustgewicht umfassen und der Schritt des Aktualisierens der ersten Verlustgewichte und der zweiten Verlustgewichte gemäß dem Modellbeurteilungsparameter des Schülermodells (SM1) basierend auf dem Gewichtsoptimierungsalgorithmus Folgendes umfasst:
Suchen des ersten Ausgabeverlustgewichts, des mindestens einen ersten Merkmalsverlustgewichts, des zweiten Ausgabeverlustgewicht und des mindestens einen zweiten Merkmalsverlustgewichts innerhalb eines gegebenen Suchraums gemäß dem Modellbeurteilungsparameter des Schülermodells (SM1).

8. Verfahren nach Anspruch 6, wobei der Modellbeurteilungsparameter eine Fréchet-Inception-Distanz umfasst.

9. Elektronische Einrichtung (100), umfassend:
eine Speichervorrichtung (110);
einen Prozessor (120), der an die Speichervorrichtung (110) gekoppelt und zu Folgendem konfiguriert ist:
Erhalten einer Vielzahl von Ausgaben der ersten Schicht eines ersten Lehrermodells (TM1) und einer Vielzahl von Ausgaben der zweiten Schicht eines zweiten Lehrermodells (TM2) durch Eingeben eines Trainingsbildes in das erste Lehrermodell (TM1) und das zweite Lehrermodell (TM2), wobei die Ausgaben der ersten Schicht ein erstes Merkmal, das von einer Schicht des ersten Lehrermodells (TM1) ausgegeben wird, und eine erste Modellausgabe des ersten Lehrermodells (TM1) umfassen, wobei die erste Modellausgabe des ersten Lehrermodells (TM1) ein erstes endgültiges entrauschtes Bild ist, die Ausgaben der zweiten Schicht eine zweite Modellausgabe des zweiten Lehrermodells (TM2) umfassen und die zweite Modellausgabe des zweiten Lehrermodells (TM2) ein zweites endgültiges entrauschtes Bild ist;
Eingeben des Trainingsbildes in ein Schülermodell (SM1), um eine Vielzahl von Ausgaben der dritten Schicht des Schülermodells (SM1) zu erhalten, wobei das Schülermodell (SM1) ein Bilderzeugungsmodell ist und die Ausgaben der dritten Schicht ein von einer Schicht des Schülermodells (SM1) ausgegebenes Merkmal und eine Modellausgabe des Schülermodells (SM1) umfassen;
Bestimmen eines ersten Verlusts zwischen den Ausgaben der ersten Schicht und den Ausgaben der dritten Schicht gemäß einer Vielzahl von ersten Verlustgewichten;
Bestimmen eines zweiten Verlusts zwischen den Ausgaben der zweiten Schicht und den Ausgaben der dritten Schicht; und
Aktualisieren des Schülermodells (SM1) unter Verwendung des ersten Verlusts und des zweiten Verlusts, um das Schülermodell (SM1) zu trainieren,
wobei der Prozessor (120) ferner zu Folgendem konfiguriert ist:
Bestimmen eines Verlusts auf Merkmalsebene zwischen dem ersten Merkmal des ersten Lehrermodells (TM1) und dem Merkmal des Schülermodells (SM1) gemäß einem von den ersten Verlustgewichten;
Bestimmen eines Verlusts auf Ausgabeebene gemäß der ersten Modellausgabe des ersten Lehrermodells (TM1) und der Modellausgabe des Schülermodells (SM1) gemäß einem weiteren der ersten Verlustgewichte; und
Bestimmen des ersten Verlusts durch Addieren des Verlusts auf Merkmalsebene und des Verlusts auf Ausgabeebene.

10. Elektronische Einrichtung (100) nach Anspruch 9, wobei sich das erste Lehrermodell (TM1) mit einer ersten Modellfähigkeit von dem zweiten Lehrermodell (TM2) mit einer zweiten Modellfähigkeit unterscheidet.

11. Elektronische Einrichtung (100) nach Anspruch 10, wobei die erste Modellfähigkeit eine erste Modellparametermenge, eine erste Inferenzschrittnummer oder die Kombination davon umfasst und die zweite Modellfähigkeit eine zweite Modellparametermenge, eine zweite Inferenzschrittnummer oder eine Kombination davon umfasst,
wobei sich die erste Modellparametermenge von der zweiten Modellparametermenge unterscheidet und die erste Inferenzschrittnummer sich von der zweiten Inferenzschrittnummer unterscheidet, oder eine Kombination davon.

12. Elektronische Einrichtung (100) nach einem der Ansprüche 9 bis 11, wobei der Prozessor (120) ferner zu Folgendem konfiguriert ist:
Bestimmen des zweiten Verlusts zwischen den Ausgaben der zweiten Schicht und den Ausgaben der dritten Schicht gemäß einer Vielzahl von zweiten Verlustgewichten.

13. Elektronische Einrichtung (100) nach Anspruch 12, wobei die Ausgaben der zweiten Schicht ein zweites Merkmal, das von einer Schicht des zweiten Lehrermodells (TM2) ausgegeben wird, und eine zweite Modellausgabe des zweiten Lehrermodells (TM2) umfassen, und die Ausgaben der dritten Schicht ein Merkmal, das von einer Schicht des Schülermodells (SM1) ausgegeben wird, und eine Modellausgabe des Schülermodells (SM1) umfassen.

14. Elektronische Einrichtung (100) nach Anspruch 12, wobei der Prozessor (120) ferner zu Folgendem konfiguriert ist:
Aktualisieren der ersten Verlustgewichte und zweiten Verlustgewichte gemäß einem Modellbeurteilungsparameter des Schülermodells (SM1) basierend auf einem Gewichtsoptimierungsalgorithmus.

15. Elektronische Einrichtung (100) nach Anspruch 14, wobei die ersten Verlustgewichte ein erstes Ausgabeverlustgewicht und mindestens ein erstes Merkmalsverlustgewicht umfassen, die zweiten Verlustgewichte ein zweites Ausgabeverlustgewicht und mindestens ein zweites Merkmalsverlustgewicht umfassen und der Prozessor (120) ferner zu Folgendem konfiguriert ist:
Suchen des ersten Ausgabeverlustgewichts, des mindestens einen ersten Merkmalsverlustgewichts, des zweiten Ausgabeverlustgewicht und des mindestens einen zweiten Merkmalsverlustgewichts innerhalb eines gegebenen Suchraums gemäß dem Modellbeurteilungsparameter des Schülermodells (SM1).

16. Elektronische Vorrichtung (100) nach Anspruch 14, wobei der Modellbeurteilungsparameter eine Fréchet-Inception-Distanz umfasst.

## Revendications

1. Procédé mis en œuvre par ordinateur d'entraînement d'un modèle de génération d'image, comprenant :
l'obtention (S210) d'une pluralité de premières sorties de couche d'un premier modèle enseignant (TM1) et d'une pluralité de deuxièmes sorties de couche d'un second modèle enseignant (TM2) en entrant une image d'entraînement dans le premier modèle enseignant (TM1) et dans le second modèle enseignant (TM2), dans lequel les premières sorties de couche comprennent une première caractéristique produite par une couche du premier modèle enseignant (TM1) et une première sortie de modèle du premier modèle enseignant (TM1), la première sortie de modèle du premier modèle enseignant (TM1) est une première image débruitée finale, les deuxièmes sorties de couche comprennent une seconde sortie de modèle du second modèle enseignant (TM2), et la seconde sortie de modèle du second modèle enseignant (TM2) est une seconde image débruitée finale ;
l'entrée (S220) de l'image d'entraînement dans un modèle étudiant (SM1) pour obtenir une pluralité de troisièmes sorties de couche du modèle étudiant (SM1), dans lequel le modèle étudiant (SM1) est le modèle de génération d'image, et les troisièmes sorties de couche comprennent une caractéristique produite par une couche du modèle étudiant (SM1) et une sortie de modèle du modèle étudiant (SM1) ; la détermination (S230) d'une première perte entre les premières sorties de couche et les troisièmes sorties de couche selon une pluralité de premiers poids de perte ;
la détermination (S240) d'une seconde perte entre les deuxièmes sorties de couche et les troisièmes sorties de couche ; et
la mise à jour (S250) du modèle étudiant (SM1) à l'aide de la première perte et de la seconde perte pour entraîner le modèle étudiant (SM1),
dans lequel l'étape de détermination de la première perte entre les premières sorties de couche et les troisièmes sorties de couche selon les premiers poids de perte comprend :
la détermination d'une perte au niveau de la caractéristique entre la première caractéristique du premier modèle enseignant (TM1) et la caractéristique du modèle étudiant (SM1) selon l'un des premiers poids de perte ;
la détermination d'une perte au niveau de la sortie selon la première sortie de modèle du premier modèle enseignant (TM1) et de la sortie de modèle du modèle étudiant (SM1) selon un autre des premiers poids de perte ; et
la détermination de la première perte en additionnant la perte au niveau de la caractéristique et la perte au niveau de la sortie.

2. Procédé selon la revendication 1, dans lequel le premier modèle enseignant (TM1) doté d'une première capacité de modèle est différent du second modèle enseignant (TM2) doté d'une seconde capacité de modèle.

3. Procédé selon la revendication 2, dans lequel la première capacité de modèle comprend une première quantité de paramètre de modèle, un premier nombre d'étapes d'inférence ou une combinaison de ceux-ci, et la seconde capacité de modèle comprend une seconde quantité de paramètre de modèle, un second nombre d'étapes d'inférence ou une combinaison de ceux-ci, dans lequel la première quantité de paramètre de modèle est différente de la seconde quantité de paramètre de modèle, le premier nombre d'étapes d'inférence est différent du second nombre d'étapes d'inférence, ou une combinaison de ceux-ci.

4. Procédé selon l'une quelconque des revendications 1 à 3, dans lequel l'étape de détermination de la seconde perte entre les deuxièmes sorties de couche et les troisièmes sorties de couche comprend :
la détermination de la seconde perte entre les deuxièmes sorties de couche et les troisièmes sorties de couche selon une pluralité de seconds poids de perte.

5. Procédé selon la revendication 4, dans lequel les deuxièmes sorties de couche comprennent une seconde caractéristique produite par une couche du second modèle enseignant (TM2) et une seconde sortie de modèle du second modèle enseignant (TM2), et les troisièmes sorties de couche comprennent une caractéristique produite par une couche du modèle étudiant (SM1) et une sortie de modèle du modèle étudiant (SM1).

6. Procédé selon la revendication 4, comprenant en outre :
la mise à jour des premiers poids de perte et des seconds poids de perte selon un paramètre d'évaluation de modèle du modèle étudiant (SM1) sur la base d'un algorithme d'optimisation de poids.

7. Procédé selon la revendication 6, dans lequel les premiers poids de perte comprennent un premier poids de perte de sortie et au moins un premier poids de perte de caractéristique, les seconds poids de perte comprennent un second poids de perte de sortie et au moins un second poids de perte de caractéristique, et l'étape de mise à jour des premiers poids de perte et des seconds poids de perte selon le paramètre d'évaluation de modèle du modèle étudiant (SM1) sur la base de l'algorithme d'optimisation de poids comprend :
la recherche du premier poids de perte de sortie, de l'au moins un premier poids de perte de caractéristique, du second poids de perte de sortie, de l'au moins un second poids de perte de caractéristique au sein d'un espace de recherche donné selon le paramètre d'évaluation de modèle du modèle étudiant (SM1).

8. Procédé selon la revendication 6, dans lequel le paramètre d'évaluation de modèle comprend une distance d'amorçage de Fréchet.

9. Appareil électronique (100), comprenant :
un dispositif de stockage (110) ;
un processeur (120), couplé au dispositif de stockage (110), et configuré pour :
obtenir une pluralité de premières sorties de couche d'un premier modèle enseignant (TM1) et une pluralité de deuxièmes sorties de couche d'un second modèle enseignant (TM2) en entrant une image d'entraînement dans le premier modèle enseignant (TM1) et dans le second modèle enseignant (TM2), dans lequel les premières sorties de couche comprennent une première caractéristique produite par une couche du premier modèle enseignant (TM1) et une première sortie de modèle du premier modèle enseignant (TM1), la première sortie de modèle du premier modèle enseignant (TM1) est une première image débruitée finale, les deuxièmes sorties de couche comprennent une seconde sortie de modèle du second modèle enseignant (TM2), et la seconde sortie de modèle du second modèle enseignant (TM2) est une seconde image débruitée finale ;
entrer l'image d'entraînement dans un modèle étudiant (SM1) pour obtenir une pluralité de troisièmes sorties de couche du modèle étudiant (SM1), dans lequel le modèle étudiant (SM1) est un modèle de génération d'image, et les troisièmes sorties de couche comprennent une caractéristique produite par une couche du modèle étudiant (SM1) et une sortie de modèle du modèle étudiant (SM1) ;
déterminer une première perte entre les premières sorties de couche et les troisièmes sorties de couche selon une pluralité de premiers poids de perte ;
déterminer une seconde perte entre les deuxièmes sorties de couche et les troisièmes sorties de couche ; et
mettre à jour le modèle étudiant (SM1) à l'aide de la première perte et de la seconde perte pour entraîner le modèle étudiant (SM1),
dans lequel le processeur (120) est en outre configuré pour :
déterminer une perte au niveau de la caractéristique entre la première caractéristique du premier modèle enseignant (TM1) et la caractéristique du modèle étudiant (SM1) selon l'un des premiers poids de perte ;
déterminer une perte au niveau de la sortie selon la première sortie de modèle du premier modèle enseignant (TM1) et la sortie de modèle du modèle étudiant (SM1) selon un autre des premiers poids de perte ; et
déterminer la première perte en additionnant la perte au niveau de la caractéristique et la perte au niveau de la sortie.

10. Appareil électronique (100) selon la revendication 9, dans lequel le premier modèle enseignant (TM1) doté d'une première capacité de modèle est différent du second modèle enseignant (TM2) doté d'une seconde capacité de modèle.

11. Appareil électronique (100) selon la revendication 10, dans lequel la première capacité de modèle comprend une première quantité de paramètre de modèle, un premier nombre d'étapes d'inférence ou une combinaison de ceux-ci, et la seconde capacité de modèle comprend une seconde quantité de paramètre de modèle, un second nombre d'étapes d'inférence ou une combinaison de ceux-ci,
dans lequel la première quantité de paramètre de modèle est différente de la seconde quantité de paramètre de modèle, le premier nombre d'étapes d'inférence est différent du second nombre d'étapes d'inférence, ou une combinaison de ceux-ci.

12. Appareil électronique (100) selon l'une quelconque des revendications 9 à 11, dans lequel le processeur (120) est en outre configuré pour :
déterminer la seconde perte entre les deuxièmes sorties de couche et les troisièmes sorties de couche selon une pluralité de seconds poids de perte.

13. Appareil électronique (100) selon la revendication 12, dans lequel les deuxièmes sorties de couche comprennent une seconde caractéristique produite par une couche du second modèle enseignant (TM2) et une seconde sortie de modèle du second modèle enseignant (TM2), et les troisièmes sorties de couche comprennent une caractéristique produite par une couche du modèle étudiant (SM1) et une sortie de modèle du modèle étudiant (SM1).

14. Appareil électronique (100) selon la revendication 12, dans lequel le processeur (120) est en outre configuré pour :
mettre à jour les premiers poids de perte et les seconds poids de perte selon un paramètre d'évaluation de modèle du modèle étudiant (SM1) sur la base d'un algorithme d'optimisation de poids.

15. Appareil électronique (100) selon la revendication 14, dans lequel les premiers poids de perte comprennent un premier poids de perte de sortie et au moins un premier poids de perte de caractéristique, les seconds poids de perte comprennent un second poids de perte de sortie et au moins un second poids de perte de caractéristique, et le processeur (120) est en outre configuré pour :
rechercher le premier poids de perte de sortie, l'au moins un premier poids de perte de caractéristique, le second poids de perte de sortie, l'au moins un second poids de perte de caractéristique au sein d'un espace de recherche donné selon le paramètre d'évaluation de modèle du modèle étudiant (SM1).

16. Appareil électronique (100) selon la revendication 14, dans lequel le paramètre d'évaluation de modèle comprend une distance d'amorçage de Fréchet.
